# EUROPEAN PATENT SPECIFICATION

(11) **EP 2 445 701 B1**
(45) Date of publication and mention of the grant of the patent: **01.02.2017**
(21) Application number: 10735107.4
(22) Date of filing: 22.06.2010
(51) Int. Cl.: B29C 47/00, B29C 47/10, B29C 67/00

(54) **CONSUMABLE MATERIALS HAVING CUSTOMIZED CHARACTERISTICS**
VERSCHLEISSMATERILAIEN MIT PERSONALISIERTEN EIGENSCHAFTEN
MATIÈRE CONSOMMABLE À CARACTÉRISTIQUES PERSONNALISÉES

(30) Priority: 23.06.2009 US 219612 P
(43) Date of publication of application: 02.05.2012
(73) Proprietor: Stratasys, Inc., Eden Prairie, MN 55344 (US)
(72) Inventor: ZINNIEL, Robert, L., Plymouth MN 55447 (US); BATCHELDER, Samuel, J., Somers NY 10589 (US)
(74) Representative: Vidon Brevets & Stratégie
(86) International application number: PCT/US2010/039409
(87) International publication number: WO 2011/005492

(56) References cited:
- WO-A1-03/089222
- WO-A1-2008/100467
- WO-A1-2008/112173
- DE-U1-202006 018 456
- US-A- 5 439 623
- US-A1- 2005 104 257
- US-B1- 6 358 453

## Description

### BACKGROUND

The present disclosure relates to direct digital manufacturing systems for building three-dimensional (3D) models. In particular, the present invention relates to the processing of consumable materials for use with digital manufacturing systems, such as extrusion-based digital manufacturing systems.

An extrusion-based digital manufacturing system (e.g., fused deposition modeling systems developed by Stratasys, Inc., Eden Prairie, MN) is used to build a 3D model from a digital representation of the 3D model in a layer-by-layer manner by extruding a flowable consumable modeling material. The modeling material is extruded through an extrusion tip carried by an extrusion head, and is deposited as a sequence of roads on a substrate in an x-y plane. The extruded modeling material fuses to previously deposited modeling material, and solidifies upon a drop in temperature. The position of the extrusion head relative to the substrate is then incremented along a z-axis (perpendicular to the x-y plane), and the process is then repeated to form a 3D model resembling the digital representation.

Examples of digital manufacturing systems include those in international Publication Nos. WO 08/100467 and WO 03/089222 and in U.S. Patent No. 6.358,453 directed to the use of a digital manufacturing system to produce prothestic limb sockets. U.S. Patent No. 5,439,623 discloses a compounding system for the manufacture of thermoplastic fibers containing additives.

Movement of the extrusion head with respect to the substrate is performed under computer control, in accordance with build data that represents the 3D model. The build data is obtained by initially slicing the digital representation of the 3D model into multiple horizontally sliced layers. Then, for each sliced layer, the host computer generates a build path for depositing roads of modeling material to form the 3D model.

In fabricating 3D models by depositing layers of a modeling material, supporting layers or structures are typically built underneath overhanging portions or in cavities of objects under construction, which are not supported by the modeling material itself. A support structure may be built utilizing the same deposition techniques by which the modeling material is deposited. The host computer generates additional geometry acting as a support structure for the overhanging or free-space segments of the 3D model being formed. Consumable support material is then deposited from a second nozzle pursuant to the generated geometry during the build process. The support material adheres to the modeling material during fabrication, and is removable from the completed 3D model when the build process is complete.

Typically, manufacturers of consumable modeling and support materials for use in digital manufacturing systems only provide modeling materials in a limited number of colors and other characteristics. This limitation is primarily due to the costs that are required to provide large selections of materials. However, there is an increasing demand for modeling materials having a wide range of colors and other characteristics for use in building 3D models. Thus, there is an ongoing need to provide users with solutions to build 3D models with a wide variety of optical and compositional characteristics.

### SUMMARY

A first aspect of the present disclosure is directed to a compounding system for forming a customized consumable material filament according to claim 1.

Another aspect of the present disclosure is directed to a method for forming a consumable material. The method includes at least partially melting a plurality of stock material filament according to claim 6.

### BRIEF DESCRIPTION OF THE DRAWINGS

FIG. 1 is a front view of an extrusion-based digital manufacturing system in use with a compounding system.
FIG. 2 is an expanded schematic illustration of the compounding system.
FIG. 3 is an expanded schematic illustration of an extrusion component of the compounding system.
FIG. 4 is a schematic illustration of an alternative take-up spool arrangement, which accounts for variations in material consumption rates.
FIG. 5 is an expanded schematic illustration of a first alternative compounding system, which includes a sensor for implementing a process control loop.
FIG. 6 is an expanded schematic illustration of a second alternative compounding system, which is suitable for investment casting processes.

### DETAILED DESCRIPTION

The present disclosure is directed to consumable materials that exhibit customized characteristics, and a compounding system for forming the consumable materials. As discussed below, the compounding system allows a user to select at least one customized characteristic for a consumable material, and the compounding system then blends appropriate amounts of two or more stock materials to form the consumable material exhibiting the desired customized characteristics. The formed consumable material may then be used in a digital manufacturing system to build 3D models and/or support structures having qualities based on the desired customized characteristics. The compounding system also allows a wide variety of customized characteristics to be obtained from a relatively small number of different stock materials, thereby reducing costs required to pre-manufacture the different stock materials.

Examples of suitable customized characteristics for the consumable materials of the present disclosure include optical characteristics, compositional characteristics, and combinations thereof. As used herein, the term "optical characteristic", with reference to a material, refers to one or more properties based on the interaction of light with the material. Examples of optical characteristics for a material include reflected colors (e.g., hues, saturation, and brightness), transmitted colors (e.g., hues, saturation, and brightness), opalescence (e.g., between clear and high scattering), glossiness (e.g., between glossy and matte appearances), and the like. As used herein, the term "compositional characteristic", with reference to a material, refers to one or more properties based on the chemical composition of the material. Examples of compositional characteristics for a material include surface energy (e.g., tacky and slippery), density, flexibility, brittleness, softness, impact strength, electrical conductiveness, thermal conductiveness, and the like. The terms optical characteristic and compositional characteristic are distinguished from purely dimensional characteristics, such as geometric shapes (e.g., a diameter of a filament).

The following discussion of consumable materials is made with reference to "modeling materials" having customized characteristics, since consumers are generally more concerned about the aesthetic and physical qualities of the intended 3D models, and are less concerned about such qualities of the "support materials" used to form support structures, which are typically removed and discarded. However, the compounding systems of the present disclosure may also be used to form "support materials" having customized characteristics in the same manner. Thus, the term "consumable material" may apply to a modeling material and to a support material.

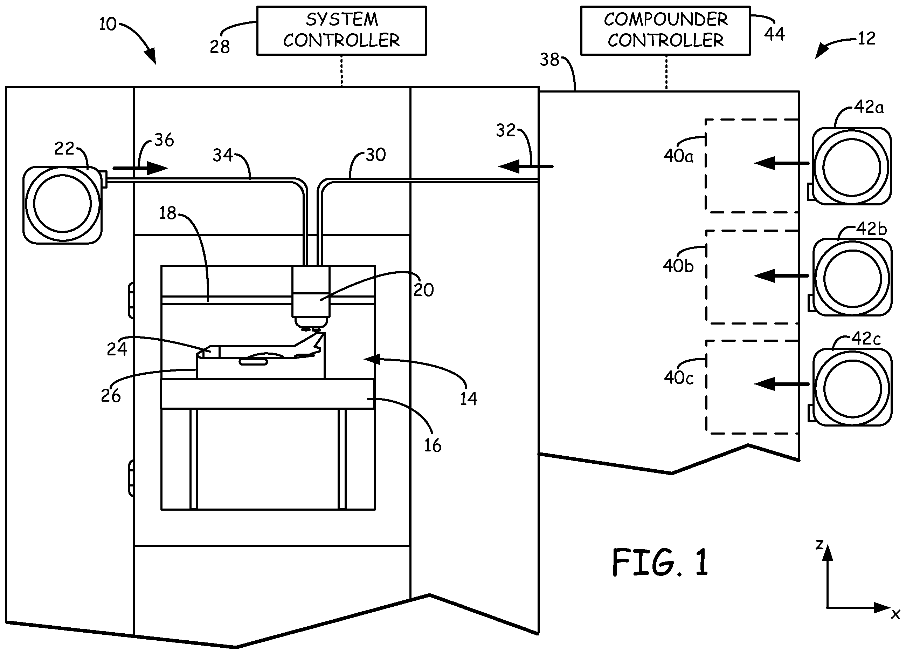

FIG. 1 shows system 10 in use with compounder 12, where system 10 is a digital manufacturing system for building 3D models, and compounder 12 is a compounding system that provides modeling materials to system 10 that may exhibit customizable characteristics, such as optical and compositional characteristics. Examples of suitable systems for system 10 include extrusion-based digital manufacturing systems, such as fused deposition modeling systems developed by Stratasys, Inc., Eden Prairie, MN. As shown, system 10 includes build chamber 14, platen 16, gantry 18, extrusion head 20, and supply source 22. Build chamber 14 is an enclosed environment that contains platen 16, gantry 18, and extrusion head 20 for building a 3D model (referred to as 3D model 24) and a corresponding support structure (referred to as support structure 26). As discussed below, 3D model 24 may be built with a modeling material obtained from compounder 12, thereby allowing 3D model 24 to exhibit customizable characteristics.

Platen 16 is a platform on which 3D model 24 and support structure 26 are built, and desirably moves along a vertical z-axis based on signals provided from a computer-operated controller (referred to as system controller 28). Gantry 18 is a guide rail system that is desirably configured to move extrusion head 20 in a horizontal x-y plane within build chamber 14 based on signals provided from controller 28. The horizontal x-y plane is a plane defined by an x-axis and a y-axis (not shown in FIG. 1), where the x-axis, the y-axis, and the z-axis are orthogonal to each other. In an alternative embodiment, platen 16 may be configured to move in the horizontal x-y plane within build chamber 14, and extrusion head 20 may be configured to move along the z-axis. Other similar arrangements may also be used such that one or both of platen 16 and extrusion head 20 are moveable relative to each other.

Extrusion head 20 is supported by gantry 18 for building 3D model 24 and support structure 26 on platen 16 in a layer-by-layer manner, based on signals provided from controller 28. In the embodiment shown in FIG. 1, extrusion head 20 is a dual-tip extrusion head configured to deposit the modeling material from compounder 12 and a support material from supply source 22. Examples of suitable extrusion heads for extrusion head 20 include those disclosed in LaBossiere, et al., U.S. Patent Application Publication Nos. 2007/0003656 and 2007/00228590; and Leavitt, U.S. Patent Application Publication No. 2009/0035405. Alternatively, system 10 may include one or more two-stage pump assemblies, such as those disclosed in Batchelder et al., U.S. Patent No. 5,764,521; and Skubic et al., U.S. Patent Application Publication No. 2008/0213419. Furthermore, system 10 may include a plurality of extrusion heads 18 for depositing modeling and/or support materials.

The customized modeling material is supplied to extrusion head 20 from compounder 12 via feed line 30 (represented by arrow 32), thereby allowing extrusion head 20 to deposit the customized modeling material to build 3D model 24. Correspondingly, the support material is supplied to extrusion head 20 from supply source 22 via feed line 34 (represented by arrow 36), thereby allowing extrusion head 20 to deposit the support material to build support structure 26. During a build operation, gantry 18 moves extrusion head 20 around in the horizontal x-y plane within build chamber 14, and one or more feed mechanisms (not shown) are directed to intermittently feed the modeling and support materials through extrusion head 20 from compounder 12 and supply source 22, respectively. The received modeling and support materials are then deposited onto platen 16 to build 3D model 24 and support structure 26 using a layer-based additive technique. Support structure 22 is desirably deposited to provide vertical support along the z-axis for overhanging regions of the layers of 3D model 24. This allows 3D object 24 to be built with a variety of geometries. After the build operation is complete, the resulting 3D model 24/support structure 26 may be removed from build chamber 14, and support structure 26 may be removed from 3D model 24.

Compounder 12 includes housing 38, which correspondingly includes a plurality of receiving bays (e.g., bays 40a-40c) configured to receive a plurality of stock materials (e.g., in cassettes 42a-42c). The stock materials may be provided to compounder 12 in a variety of different media. For example, the stock materials may be provided as continuous filament strands fed from spool assemblies and/or containers. Suitable spool assemblies for providing continuous filament strands of the stock materials include those disclosed in Dahlin et al., U.S. Patent No. 6,022,207 and Taatjes et al., U.S. Patent Application Publication No. 2010/0096489. Suitable containers (e.g., cassettes and cartridges) for providing continuous filament strands of the stock materials include those disclosed in Swanson et al., U.S. Patent No. 6,923,634; Comb et al., U.S. Patent No. 7,122,246; and Taatjes et al., U.S. Patent Application Publication No. 2010/0096485.

As discussed below, under the direction of a second controller (e.g., a computer-operated controller, referred to as compounder controller 44), compounder 12 may blend appropriate amounts of the stock materials to form a modeling material that exhibits desired customized characteristics, such as desired optical characteristics and/or desired compositional characteristics. Additionally, the modeling material provided to system 10 desirably exhibits dimensions that are within the dimensional specifications for system 10. as used herein, the phrase "within dimensional specifications for a digital manufacturing system", and the like, with respect to the dimensions of a consumable material, refers to dimensions that substantially meet the dimensional tolerance specifications for building a 3D model with the consumable material in the respective digital manufacturing system.

Digital manufacturing systems, such as fused deposition modeling systems developed by Stratasys, Inc., Eden Prairie, MN, typically require modeling materials that meet tight dimensional tolerances due to the precision required in building 3D models with layer-based additive techniques. As such, in addition to blending appropriate amounts of the stock materials to attain the desired optical and compositional characteristics, compounder 12 also desirably feeds appropriate amounts of each stock material such that the resulting modeling material has dimensions that are usable by system 10.

Furthermore, in the embodiment shown in FIG. 1, compounder 12 may be secured to system 10 to function as a supply source of the modeling material during a build operation. In this embodiment, compounder 12 may be operated in a continuous manner to supply the customized modeling material to system 10 while system 10 deposits the modeling material to build 3D model 24. The engagement between system 10 and compounder 12 also desirably provides a moisture barrier to reduce the risk of exposing the formed modeling material to humid air. In some embodiments, compounder 12 may be removably engagable with system 10 to allow system 10 to also be operated without the use of compounder 12 (e.g., with standard modeling materials). In an alternative embodiment, compounder 12 may be operated as a stand-alone system that forms the modeling material for subsequent use in system 10.

As discussed above, the combination of compounder 12 with system 10 allows a user to build 3D models (e.g., 3D model 24) having desired customized characteristics, while also reducing the number of different stock materials that are required to be manufactured. This allows a limited number of stock materials to be manufactured for use with compounding systems (e.g., compounder 12), where each of the stock materials may exhibit a unique set of material properties, such as a different optical characteristic and/or a different compositional characteristic. For various uses, the stock materials may exhibit different base color components, different levels of transparency and/or translucency, different levels of glossiness and/or reflectiveness, different chemical modifiers, and combinations thereof. Compounder 12 may then use two or more of the stock materials to obtain modeling materials having a large number of customized characteristics based on the optical and compositional characteristics of the stock materials.

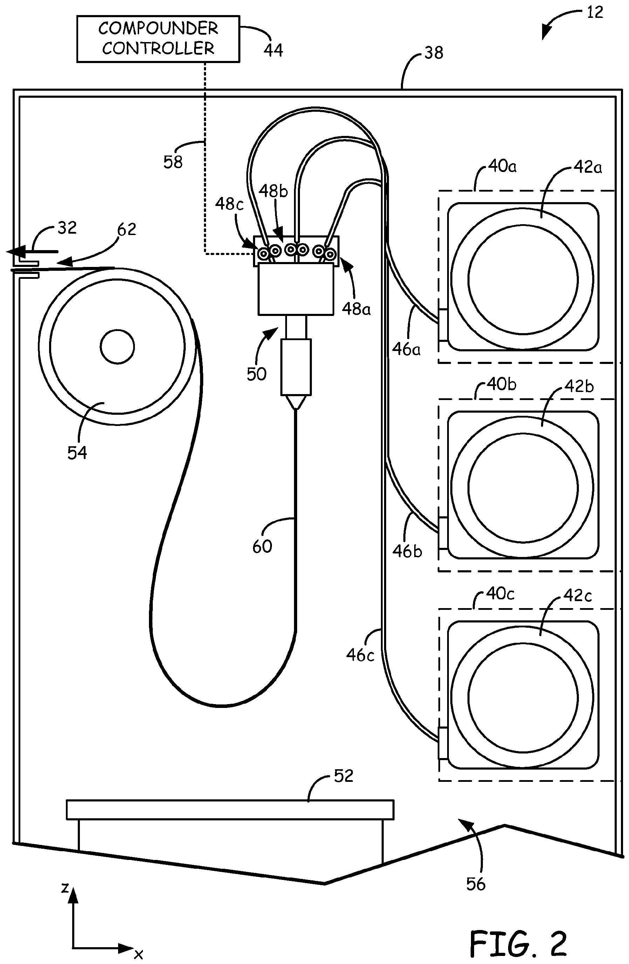

FIG. 2 is an expanded view of compounder 12, where, in the shown embodiment, the stock materials are provided to compounder 12 in filament form. The filament is a convenient media for feeding the stock materials to compound 12, as well as being directly usable as a modeling material in system 10 if compounding is not required. As shown, compounder 12 also includes a plurality of guide tubes (e.g., guide tubes 46a-46c), a plurality of drive mechanisms (e.g., drive mechanisms 48a-48c), extrusion component 50, catch plate 52, and take-up spool 54, each of which reside within the interior region of housing 38 (referred to as interior region 56).

Guide tubes 46a-46c direct filaments of the stock materials from cassettes 42a-42c to drive mechanisms 48a-48c, respectively. Drive mechanisms 48a-48c communicate with compounder controller 44 via communication line 58, which allows compounder controller 44 to independently direct the operation of each of drive mechanisms 48a-48c. As discussed above, this allows the appropriate amounts of each stock material to be selectively fed to extrusion component 50 at rates that may be independent of each other. Extrusion component 50 is configured to melt and blend the received stock materials, and to extrude the resulting blended materials as modeling material filament 60 in an extrudable state. As shown in FIG. 2, upon exiting extrusion component 50, filament 60 may solidify and loop up to take-up spool 54, where it may be collected and/or relayed to system 10 (shown in FIG. 1) via exit orifice 62 in housing 38.

During start up of compounder 12, a user may input the desired customized characteristic(s) (e.g., optical and/or compositional characteristics) into compounder 12 (e.g., via compounder controller 44) and load the appropriate stock materials (e.g., cassettes 42a-42c) into bays 40a-40c, respectively. The appropriate amounts of each stock material is then fed to extrusion component 50, melted and blended, and extruded as filament 60 downward toward catch plate 52. Prior to reaching a steady state flow, filament 60 may exhibit dimensional variations (e.g., variations in the filament diameter). As such, the initial portion of filament 60 may be collected on catch plate 52. When a steady state flow is reached, the initial portion of filament 60 may be cut from the remaining portion of filament 60 and recycled or discarded. As filament 60 continues to extrude from extrusion component 50, the remaining portion of filament 60 may be looped around take-up spool 54 and relayed to system 10 via exit orifice 62, as the modeling material.

The length of filament 60 between extrusion component 50 and take-up spool 54 is desirably great enough to allow filament 60 to substantially or entirely solidify before reaching take-up spool 54, while also desirably remaining below the elastic strain limit of the extrudate material (e.g., about 0.2% strain). The solidification period for filament 60 is dependent on several factors, such as the temperature of interior region 56, the temperature of filament 60, and the extrusion rate of filament 60. For example, a filament having a diameter of about 1.8 millimeters (about 70 mils) and formed from thermoplastic stock materials (e.g., acrylonitrile-butadiene-styrene (ABS)), within interior region 56 having a temperature of about 25°C, will require less than about eight minutes to solidify. Thus, the loop of filament 60 desirably provides a suitable length to allow a residence time within interior region 56 of least about eight minutes, and more desirably at least about fifteen minutes.

Suitable steady-state extrusion rates of filament 60 from extrusion component 50 may vary, and desirably match the rate of modeling material consumption in system 10. Examples of suitable steady-state extrusion rates of filament 60 from extrusion component 50 range from about 1.3 millimeters/second (about 0.05 inches/second) to about 50 millimeters/second (about 2.0 inches/second), with particularly suitable rates ranging from about 2.5 millimeters/second (about 0.1 inches/second) to about 25 millimeters/second (about 1.0 inch/second), and with even more particularly suitable rates ranging from about 2.5 millimeters/second (about 0.1 inches/second) to about 13 millimeters/second (about 0.5 inches/second).

Interior region 56 is desirably maintained at a low humidity level to reduce the absorption of water into filament 60. As such, compounder 12 may include desiccant packs (not shown) within interior region 56 and/or may blow dry air through interior region 56 to maintain a dry environment. This, in combination with the extrusion process within extrusion component 50, which tends to drive out water, allows the resulting filament 60 to maintain a low moisture content (e.g., less than about 700 parts-per-million by weight). Furthermore, the engagement between system 10 and compounder 12 at exit orifice 62 may include a moisture barrier, as discussed above.

Upon cooling, filament 60 desirably exhibits dimensions that are within the dimensional specifications for system 10. In embodiments in which system 10 is an extrusion-based digital manufacturing system, such as fused deposition modeling systems developed by Stratasys, Inc., Eden Prairie, MN, suitable average diameters for filament 60 range from about 1.3 millimeters (about 50 mils) to about 3 millimeters (about 120 mils), with particularly suitable average diameters ranging from about 1.5 millimeters (about 60 mils) to about 2.0 millimeters (about 80 mils), and with even more particularly suitable average diameters ranging from about 1.6 millimeters (about 65 mils) to about 1.9 millimeters (about 75 mils).

Additionally, filament 60 desirably exhibits limited dimensional variations over the length of filament 60. Examples of suitable diameter variations include root-mean-square variations of about 12 micrometers (about 0.5 mils) or less, with particularly suitable root-mean-square variations of about 8 micrometers (about 0.3 mils) or less. Moreover, suitable peak-to-peak variations along the length of filament 60 includes variations of about 250 micrometers (about 10 mils) or less, with particularly suitable variations of about 150 micrometers (about 6 mils) or less. As used herein, the root-mean-square variations and peak-to-peak variations are measured pursuant to a filament segment having a length of 30.5 meters (100-feet). Compounder 12 may also include additional components to assist in obtaining dimensions for filament 60 that are within the dimensional specifications for system 10. Suitable additional components include those disclosed in Comb et al., U.S. Patent Nos. 6,866,807 and 7,122,246.

In some embodiments, the stock materials may also exhibit dimensions that are within the dimensional specifications for system 10. In these embodiments, a given stock material may be directly used with system 10 to build 3D models having the desired characteristics of the given stock material. Examples of suitable dimensions (e.g., diameters) for the stock materials include the average diameters, diameter variations, and peak-to-peak variations for each of the stock materials include those discussed above for filament 60. Accordingly, filament 60 may be extruded from stock materials having substantially the same dimensions as filament 60, while attaining customized characteristics of filament 60 are based on the characteristics (e.g., optical and compositional characteristics) of the stock materials.

In alternative embodiments in which the filaments exhibit non-cylindrical geometries, examples of suitable non-cylindrical filaments include those disclosed in Batchelder et al., U.S. Patent Application No. 12/612,333. In these embodiments, the non-cylindrical filaments desirably exhibit dimension that are within the dimensional specifications for the corresponding system, such as those disclosed in Batchelder et al., U.S. Patent Application No. 12/612,329.

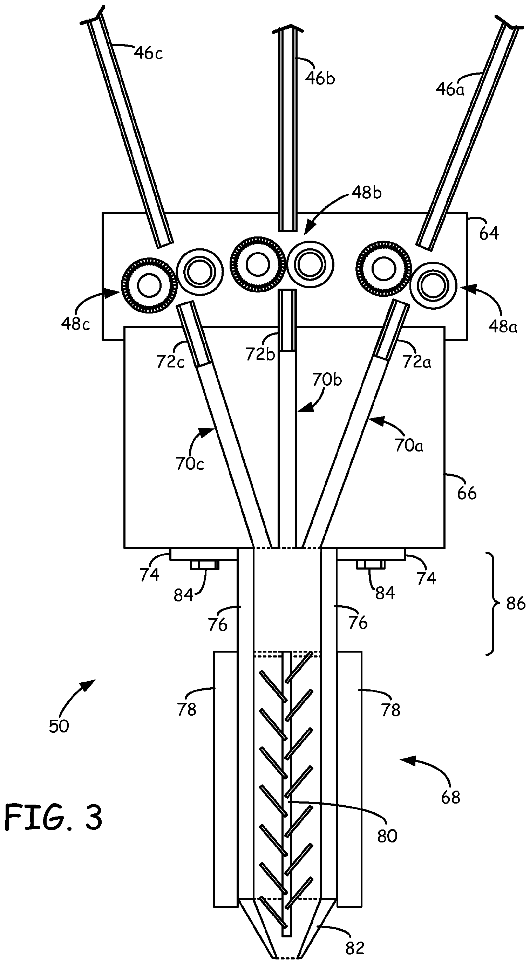

FIG. 3 is an expanded schematic illustration of the exemplary extrusion component 50 in use with guide tubes 46a-46c and drive mechanisms 48a-48c. As shown, guide tubes 46a-46c are desirably arranged to direct the filaments of the stock materials to drive mechanisms 48a-48c. Drive mechanisms 48a-48c each include a pair of wheels that are configured to engage with a filament of one of the stock materials, thereby allowing the stock materials to be fed independently of each other. Examples of suitable drive mechanisms for each of drive mechanisms 48a-48c include those disclosed in Swanson et al., U.S. Patent No. 7,169,337; LaBossiere et al., U.S. Patent No. 7,384,255; and LaBossiere et al., U.S. Patent Application Publication No. 2007/0228590. The pair of wheels are rotatably supported by base block 64, and at least one of the wheel pairs is desirably motor driven under the direction of compounder controller 44 (shown in FIGS. 1 and 2) to selectively feed successive portions of the stock material to extrusion component 50.

Extrusion component 50 includes guide manifold 66 and liquefier 68, where guide manifold includes a plurality of channels (e.g., channels 70a-70c) for guiding the received filaments from drive mechanisms 48a-48c to liquefier 68. A plurality of inlet tubes (e.g., inlet tubes 72a-72c) may also be used to assist in guiding the filaments from drive mechanisms 48a-48c into channels 70a-70c.

It is noted that while the above-discussed examples for compounder 12 illustrate the use of three stock materials, compounder 12 may be arranged for use with any number of different stock materials. Suitable numbers of different stock materials for use with compounder 12 include at least two, with particularly suitable numbers ranging from two to twenty, and with even more particularly suitable numbers ranging from three to ten. For example, for optical characteristics, the different stock materials may be based on red-green-blue (RGB) color components, cyan-magenta-yellow key (black) (CMYK) color components, cyan-magenta-yellow key (black)-orange-green (CMYKOG) color components, Neugebauer primaries, transparency and translucency variants, glossiness and reflectiveness variants, and the like. Correspondingly, for compositional characteristics, the different stock materials may include additives that provide the desired compositional characteristics.

For each different stock material used, compounder 12 desirably includes at least one corresponding bay for receiving the stock material (e.g., bay 40a), at least one guide tube (e.g., guide tube 46a), at least one drive mechanism (e.g., drive mechanism 48a), and at least one channel in the guide manifold (e.g., channel 70a). Additionally, in some embodiments, compounder 12 may include two bays for each stock material, thereby allowing supplies of a given stock material (e.g., cassettes 42a) to be interchangeably used. This allows the continuous process to be maintained when a given cassette runs out of stock material.

Liquefier 68 includes mounting flange 74, liquefier case 76, thermal block 78, mixer 80, and extrusion tip 82. Mounting flange 74 is the portion of liquefier 68 that is securable to guide manifold 66 (e.g., via bolts 84), and is secured adjacent to the inlet end of liquefier case 76. Liquefier case 76 is a conductive tube (e.g., metallic tube) that conducts thermal energy to the received stock materials, thereby (at least partially) melting the stock materials. Thermal block 78 is a heat-producing component that extends around liquefier case 76 to conduct thermal energy to liquefier case 76, thereby providing a thermal profile along the longitudinal length of liquefier case 76. As discussed below, thermal block 78 may be removed from liquefier case 76 to allow thermal block 78 to be interchangeably secured to multiple liquefier cases 76. For example, thermal block 78 may be clampable around, or slidable onto, liquefier case 76.

Mixer 80 is a mixing component located within liquefier case 76 for blending the molten stock materials. As shown, mixer 80 desirably extends at least partially along the longitudinal length of liquefier case 76, and may be an active mixer (e.g., viscosity pumps and twin-screw extruders) or a passive mixer (e.g., double corkscrew arrangements). Examples of suitable passive mixers having double corkscrew arrangements include those disclosed in Wheatcraft et al., U.S. Patent Application Publication No. 2007/0289996, where the components are desirably fabricated from materials capable of withstanding the elevated temperatures of liquefier case 76. Extrusion tip 82 is secured to the outlet end of liquefier case 76, and desirably has a diameter that allows filament 60 (shown in FIG. 2) to exhibit dimensions upon cooling that are within dimensional specifications for system 10 (shown in FIG. 1). In alternative embodiments in which the filaments are non-cylindrical filaments, extrusion tip 82 may exhibit suitable dimensions for extruding the filaments having the desired non-cylindrical geometries.

During a compounding operation, thermal block 78 heats liquefier casing 76 to a desired temperature to melt the stock materials. Drive mechanisms 48a-48c selectively feed successive portions of the filaments of the stock materials into channels 70a-70c, respectively. Accordingly, the rates at which the filaments are fed into channels 70a-70c may be independent of each other, based on commands from compounder controller 44. The filaments exit channels 70a-70c into a thermal transition zone of liquefier casing 76, located adjacent the inlet end of liquefier casing 76 (referred to as zone 86). The elevated temperature of liquefier casing 76 conductively heats the received filaments to melt the stock materials to blendable and extrudable states. The unmelted portions of the stock material filaments function as pistons to force the melted portions into mixer 80.

As the molten materials move through mixer 80, they are sheared and folded, thereby blending the materials to a substantially homogenous state. In particular, the materials are desirably blended until the resulting mixture is substantially homogenous to the naked eye, even when 3D model 24 (shown in FIG. 1) is post-processed (e.g., sanded, tapped, machined, vapor smoothed, media blasted, and the like). The mixture then exits extrusion tip 82 as filament 60 in an extrudable state, as discussed above. Upon cooling and solidifying, the homogenous mixture provides the desired customized characteristic for filament 60, which is based on the characteristics (e.g., optical and compositional characteristics) of the blended stock materials.

When the compounding operation is completed or when the user otherwise wishes to switch the desired customized characteristics of filament 60, compounder controller 44 may direct drive mechanisms 48a-48c to feed the stock materials at new rates (different from the previous rates), independently of each other, to form filament 60 exhibiting the newly desired customized characteristic. Alternatively, if the newly desired customized characteristic is unattainable with the present stock materials, the user may remove the current stock materials and feed the appropriate stock materials to extrusion component 50. In either case, the new stock materials eventually purge the previous materials from liquefier 68, thereby allowing the resulting filament 60 to exhibit the newly desired customized characteristic.

In an alternative embodiment, after a compounding operation is completed, liquefier 68 may be removed from guide manifold 66 and replaced with a clean liquefier 68. This embodiment is beneficial for reducing the changeover time that is otherwise required to purge the previous material from liquefier 68, particularly in the region of mixer 80. Accordingly, thermal block 68 may be removed from liquefier case 78, and the remaining portion of liquefier 68 may be unsecured from guide manifold 66. A clean liquefier 68 may then be secured to guide manifold 66 (e.g., with bolts 84), thermal block 78 may be secured around the clean liquefier case 78, and the new compounding operation may start up, as discussed above. The previous liquefier 68 may then be subsequently reused for forming a filament 60 with the previous customized characteristic, or cleaned for subsequent use.

In various embodiments, compounder 12 may be operated in an automated manner and/or manually. For example, in an automated operation, compounder controller 44 may include pre-programmed operating instructions for forming consumable materials having a variety of different customized characteristics, where the instructions may be stored on one or more computer-storage media. In this embodiment, a user may input one or more desired customized characteristics and load the appropriate stock materials into bays 40a-40c. Compounder controller 44 may then, based on the operating instructions, determine the rates at which to feed the stock materials to extrusion component 50.

For example, if the user desires filament 60 to have a green color, stock materials having blue and yellow colors may be supplied to bays 40a and 40b, as discussed above. The user may then input the particular shade of green to compounder 12 and/or compounder controller 44 (or other computer-based system). Compounder controller 44 may then, pursuant to the operating instructions, direct drive mechanism 48a and 48b to feed the stock materials from bays 40a and 40b at predetermined rates to attain the desired shade of green for filament 60.

For a pure-green shade, drive mechanisms 48a and 48b may feed the respective feedstock materials at substantially the same rates (in embodiments in which the stock materials have substantially the same cross-sectional areas). Alternatively, if the user desired an aqua/cyan color for filament 60, compounder controller 44 may direct drive mechanism 48a to feed the blue stock material at a rate that is greater than the feed rate of the yellow stock material by drive mechanism 48b.

In another example, if the user desires filament 60 to have a particular compositional characteristic, such as a particular rheology that is not available with any of the stock materials, the user may load suitable stock materials to bays 40a and 40b (and, in some situations, bay 40c). The user may then input the particular rheology to compounder 12 and/or compounder controller 44 (or other computer-based system). Compounder controller 44 may then, pursuant to the operating instructions, direct two or more of drive mechanisms 48a-48c to feed the stock materials from bays 40a-40c at independent and predetermined rates to attain the desired rheology for filament 60.

In yet another example, if the user desires filament 60 to have a particular optical characteristic and a particular compositional characteristic, such as a particular shade of green and a particular rheology, that are not available with any of the stock materials, the user may load suitable stock materials to bays 40a, 40b, and/or 40c. The user may then input the particular optical and compositional characteristics to compounder 12 and/or compounder controller 44 (or other computer-based system). Compounder controller 44 may then, pursuant to the operating instructions, direct two or more of drive mechanisms 48a-48c to feed the stock materials from bays 40a-40c at independent and predetermined rates to attain the desired shade of green and rheology for filament 60.

Accordingly, compounder 12 may be used to form filaments having a variety of different customized characteristics in an automated manner. Alternatively, a user may manually enter the independent drive rates of one or more of drive mechanisms 48a-48c. For example, a user may rely on an external reference (e.g., a chart) for compounder 12 that instructs the user to manually select the independent drive rates to attain filament 60 with the desired customized characteristics.

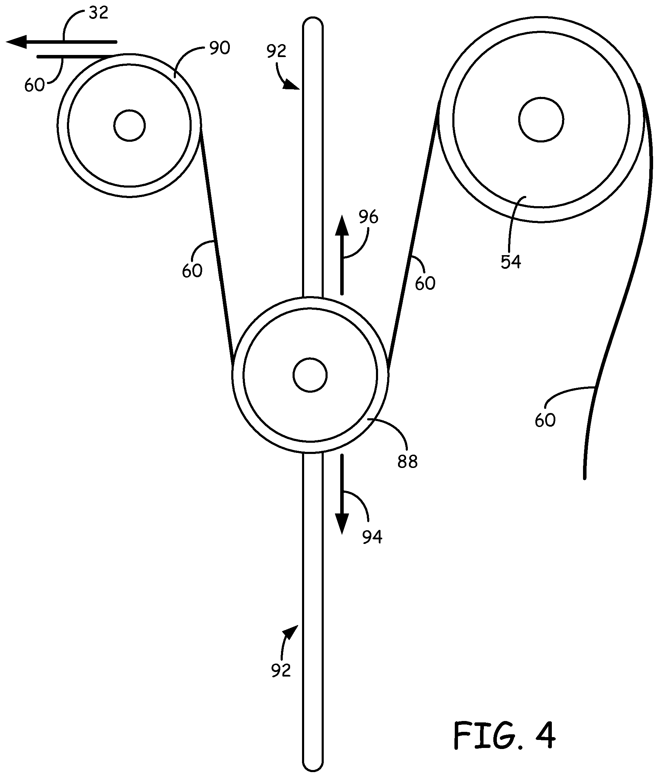

FIG. 4 is a schematic illustration of an alternative arrangement to take-up spool 54, which accounts for variations in the rates that system 10 (shown in FIG. 1) consumes the modeling material during a build operation to build 3D model 24 (shown in FIG. 1). As discussed above, the steady-state extrusion rate of filament 60 desirably matches the rate of modeling material consumption in system 10. However, the rates of consumption in system 10 may vary during the build operation. To compensate for these consumption rate variations, compounder 12 may further include floating-axis pulley 88 and fixed axis pulley 90, where floating-axis pulley 88 is configured to move vertically along a track in housing 38 (referred to as track 92). Upon leaving take-up spool 54, filament 60 winds below floating-axis pulley 88 and over fixed-axis pulley 90 before leaving compounder 12 via exit orifice 62 (shown in FIG. 2).

Floating-axis pulley 88 is a weighted roller that is lowered downward along track 92 (represented by arrow 94) when the consumption rate of filament 60 by system 10 is lower than the rate that filament 60 is formed in compounder 12. This increases the supply of filament 60 within compounder 12 until the consumption rate by system 10 increases. When the consumption rate of filament 60 by system 10 is greater than the rate that filament 60 is formed in compounder 12, floating-axis pulley 88 is then raised upward along track 92 (represented by arrow 96). This arrangement varies the length of filament 60 within housing 38 and functions as a buffer to compensate for the consumption rate variations in system 10 while compounder 12 continues to form filament 60 at the steady-state extrusion rate. In additional alternative embodiments, compounder 12 may also include additional numbers of floating and fixed-axis pulleys to provide a greater level of buffering.

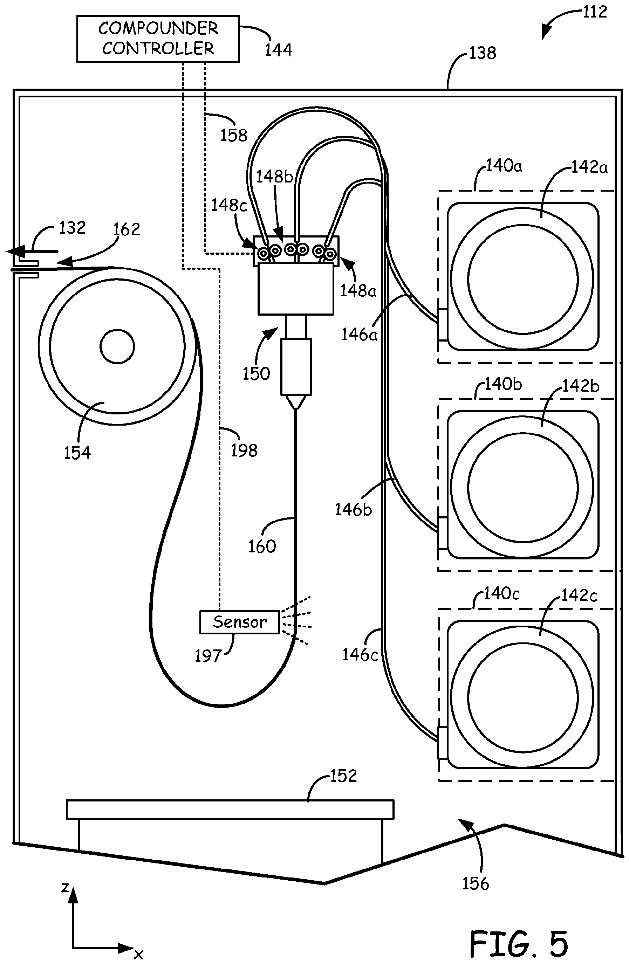

FIG. 5 is an expanded view of compounder 112, which is an alternative to compounder 12 (shown in FIGS. 1-3), where the respective reference labels are increased by "100". As shown, compounder 112 further includes sensor 197 and communication line 198, where sensor 197 is desirably an optical and/or a contact sensor configured to detect the optical, compositional, and/or dimensional characteristics of filament 160 as filament 160 is extruded from compounder component 150. Information relating to the optical, compositional, and dimensional characteristics of filament 160 may be relayed to compounder controller 144 via communication line 198. This embodiment is beneficial for providing real-time detection of the optical, compositional, and/or dimensional characteristics of filament 160, thereby allowing compounder controller 144 to vary the drive rates of one or more of drive mechanisms 148a-148c pursuant to a process control loop.

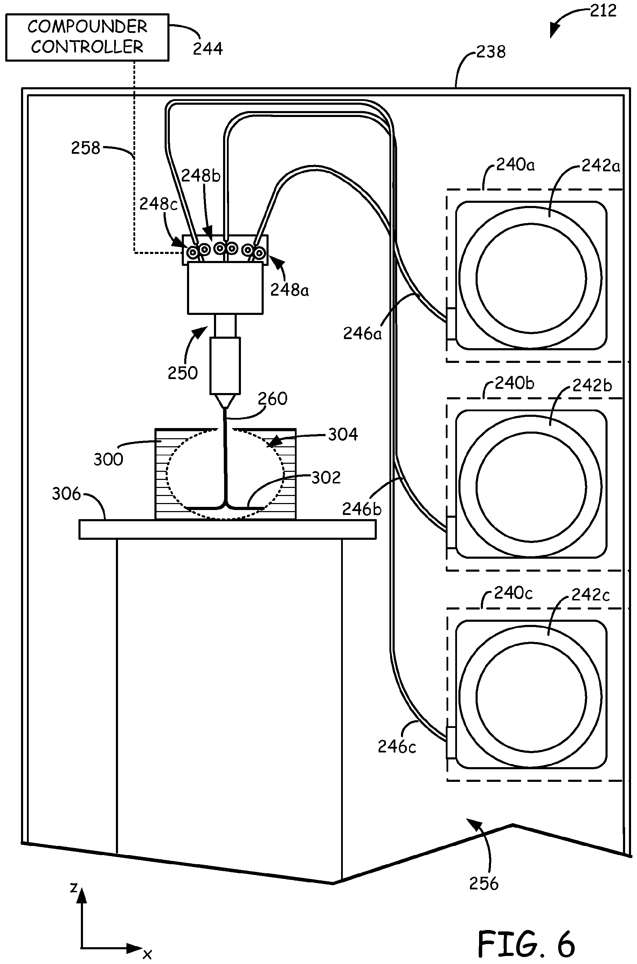

FIG. 6 is an expanded view of compounder 212, which is another alternative to compounder 12 (shown in FIGS. 1-3), where the respective reference labels are increased by "200". As shown, compounder 212 is suitable for use in an investment casting process, where filament 260 is deposited into mold 300 to form a desired model 302 in an interior cavity of mold 300 (referred to as interior cavity 304). This provides the desired model 302 with dimensions based on the geometry of interior cavity 304, and customized characteristics based on the characteristics of the stock materials. In this embodiment, interior region 256 is desirably heated to, and maintained at, one or more temperatures that are above the solidification temperature of the blended modeling material of filament 260. This allows the modeling material to substantially fill interior cavity 304 before solidifying, and reduces the risk of mechanically distorting (e.g., curling) model 302 upon solidifying within interior cavity 304.

Mold 300 may be fabricated using a variety of molding techniques, and using a variety of materials that are capable of withstanding the elevated temperature of interior region 256. In one embodiment, mold 300 is a 3D model and/or a support structure fabricated in a digital manufacturing system (e.g., system 10). Suitable techniques for this investment casting process include those disclosed in Crump et al., U.S. Patent No. 7,125,512; Priedeman, Jr. et al., U.S. Patent No. 7,255,821; and Zinniel et al., U.S. Patent Nos. 7,236,166 and 7,502,023. This process allows 3D models (e.g., model 302) to be based on individualized CAD models, while reducing the overall build time by bulk filling interior cavity 304 of mold 300 with the modeling material of filament 260.

Accordingly, in this embodiment, mold 300 may be built in a layer-by-layer manner with a high-temperature modeling material (e.g., polycarbonates and polyphenylsulfones), which is capable of withstanding the elevated temperature of interior region 256. Once fabricated, mold 300 may undergo one or more post-processing operations (e.g., support structure removal and vapor smoothing). When ready, mold 300 may be placed on platform 306 located below extrusion component 250 within interior region 256, and interior region 256 may then be heated to the desired temperature. In one embodiment, a vacuum may also be pulled within interior region 256 to reduce the risk of incurring air pockets within interior cavity 304.

The stock materials may then be fed to extrusion component 250, where they are melted and blended, and extruded into interior cavity 304 as filament 260. In this embodiment, filament 260 may exhibit dimensions that are substantially larger than filaments 60 and 160 (shown in FIGS. 2 and 5), thereby allowing interior cavity 304 to be bulk filled at a rate that is greater than the extrusion rates of filaments 60 and 160. Examples of suitable stead-state extrusion rates for filament 260 from extrusion component 250 range from about 2.5 millimeters/second (about 0.1 inches/second) to about 510 millimeters/second (about 20.0 inches/second), with particularly suitable rates ranging from about 13 millimeters/second (about 0.5 inch/second) to about 250 millimeters/second (about 10 inches/second), and with even more particularly suitable rates ranging from about 13 millimeters/second (about 0.5 inches/second) to about 130 millimeters/second (about 5.0 inches/second).

The extrusion rate of filament 260 desirably maintains a low injection pressure against mold 300 to reduce the risk of damaging mold 300 during the filling process (e.g., less than about 50 pounds/inch²). After interior cavity 304 is filled with the modeling material of filament 260, the temperature of interior region 256 may be slowly reduced to solidify model 302. Upon solidification, mold 300 may be removed from model 302, thereby providing the desired 3D model 302 based on the intended CAD model, and having optical and compositional characteristics based on the optical and compositional characteristics of the stock materials.

The above-discussed stock material for use in compounders 12, 112, and 212 may be extruded into filament form from any suitable material. Examples of suitable materials for the stock material include thermoplastic materials, such as acrylonitrile-butadiene-styrene (ABS) copolymers, polycarbonates, polyphenylsulfones, modified variations thereof (e.g., ABS-M30 copolymers), and blends thereof. The stock materials may also include one or more optical-characteristic additives, one or more compositional-characteristic additives, and combinations thereof. Suitable optical-characteristic additives include dyes, pigments, crystalline colorants (e.g., photonic polycrystals), matting agents, opacifiers, and combinations thereof, where suitable concentrations of the optical-characteristic additives in the stock materials may vary depending on the particular optical characteristics to be attained. Examples of suitable concentrations of the optical characteristic additives in the stock materials range from about 0.01% by weight to about 10% by weight, with particularly suitable concentrations ranging from about 1% by weight to about 5% by weight.

Examples of suitable compositional-characteristic additives include surfactants, rheology-modifying agents, electrically-conductive materials, plasticizers, heat stabilizers, photostabilizers, tackifiers, and combinations thereof. Suitable concentrations of the compositional-characteristic additives in the stock materials may vary depending on the particular compositional characteristics to be attained. Suitable surfactants for use in the coating composition include non-ionic and anionic surfactants, organosilicone compounds, fluorocarbon surfactants, and combinations thereof. Examples of suitable concentrations of surfactants in the stock materials range from about 0.01% by weight to about 5% by weight, with particularly suitable concentrations ranging from about 1% by weight to about 2% by weight.

Suitable rheology-modifying agents for the coating composition include thixiotropic materials, fillers, and thickeners, such as silica quartz, calcium carbonates, magnesium carbonates, barium carbonates, carbon black, talc, wollastonite, mica, alumina, silica, kaolin, silicon carbides, silicon dioxides, and combinations thereof. Examples of suitable concentrations of rheology-modifying agents in the stock materials range from about 0.1% by weight to about 10% by weight, with particularly suitable concentrations ranging from about 1% by weight to about 5% by weight.

Suitable electrically-conductive materials include graphite, nanotubes, conductive metals (e.g., silver), and combinations thereof. Examples of suitable concentrations of electrically-conductive materials in the stock materials range from about 0.1% by weight to about 5% by weight, with particularly suitable concentrations ranging from about 1% by weight to about 3% by weight.

Suitable plasticiziers include dialkyl phthalates, cycloalkyl phthalates, benzyl phthalates, aryl phthalates, alkoxy phthalates, alkyl/aryl phosphates (e.g., triphenyl phosphate), carboxylic acid esters, polyglycol esters, adipate esters, citrate esters, esters of glycerin, and combinations thereof. Examples of suitable concentrations of electrically-conductive materials in the stock materials range from about 0.1% by weight to about 30% by weight, with particularly suitable concentrations ranging from about 2% by weight to about 10% by weight.

The above-discussed compounding systems and stock materials provide suitable solutions to build 3D models and/or support structures with customized characteristics (e.g., optical and/or compositional characteristics). This allows a wide variety of customized characteristics to be obtained from a relatively small number of different stock materials, which reduces costs required to pre-manufacture the different stock materials and expands the realm of aesthetic and functional qualities that may attained with digital manufacturing systems.

## Claims

1. A compounding system (12) for forming a customized consumable material filament (60), the compounding system (12) comprising:
a controller (44) configured to operably receive a user input related to one or more user-selected material characteristics;
a plurality of drive mechanisms (48a-48c) configured to operably communicate with the controller (44), and further configured to feed a plurality of stock material filaments at independent feed rates that are determined based at least in part upon the user input;
an extrusion component (50) comprising a guide manifold (66) having a plurality of channels (70a-70c) for guiding the received stock material filaments from the drive mechanisms (48a-48c) to a liquefier (68) having a mixing component (80) at least partially disposed therein and the extrusion component (50) configured to receive the plurality of fed stock material filaments, at independent feed rates and further configured to at least partially melt and blend the received stock materials within the liquefier (68) to provide the customized consumable material filament (60) in an extrudable state at an extrusion rate to an extrusion head (20) of a digital manufacturing system (10), wherein upon solidifying the customized consumable material filament (60) exhibits the one or more user-selected material characteristics and average diameters that are within dimensional specifications for the digital manufacturing system (10);
a take-up spool (54) configured to receive the customized consumable material filament (60) from the extrusion component (50); and
the take-up spool (54) configured to relay the customized consumable material filament (60) to an extrusion head (20) of the digital manufacturing system (10).

2. The compounding system (12) of claim 1, wherein the customized consumable material filament (60) comprises:
at least one optical characteristic based on optical characteristics of the plurality of stock material filaments, and
at least one compositional characteristic based on compositional characteristics of the plurality of stock material filaments.

3. The compounding system (12) of claim 1, and further comprising an optical sensor (197) configured to operably communicate with the controller (44), and further configured to detect the customized consumable material filament (60) after the customized consumable material filament (60) exits the extrusion component (50).

4. The compounding system (12) of claim 1, wherein the dimensions of the customized consumable material filament (60) define a filament having an average diameter ranging from about 1.3 millimeters to about 2.5 millimeters.

5. The compounding system (12) of claim 1, and further comprising a housing (38) securable to a digital manufacturing system (10).

6. A method for forming a customized consumable material filament (60) for use in a digital manufacturing system, the method comprising:
receiving a plurality of stock material filaments, wherein at least one of the stock material filaments has average diameters that are within dimensional specifications for a digital manufacturing system (10);
receiving a user input related to one or more user-selected material characteristics;
determining independent feed rates for at least two of the stock material filaments based at least in part upon the user input;
guiding the received at least two stock material filaments with a guide manifold (66) to a liquefier (68) of an extrusion component (50);
feeding the at least two stock material filaments to an extrusion component (50) based on the determined independent feed rates wherein the extrusion component comprises the liquefier (68) having a mixing component (80) disposed at least partially therein and the guide manifold (66) configured to guide the at least two stock material filaments to the liquefier (68);
melting and blending together the fed stock material filaments while concurrently feeding the stock material filaments at independent feed rates through the liquefier (68) in the extrusion component (50);
extruding the blended materials to provide the customized consumable material filament (60), wherein upon solidifying, the customized consumable material filament (60) exhibits the one or more user-selected material characteristics and average dimensions that are within the dimensional specifications for the digital manufacturing system (10);
relaying the customized consumable material filament (60) from the extrusion component (50) to a take-up spool (54);
directing the customized consumable material filament (60) from the take-up spool (54) to an extrusion head (20) of the digital manufacturing system (10) for use at a consumption rate.

7. The method of claim 6, wherein each of the plurality of stock material filaments has average dimensions that are each within the dimensional specifications for the digital manufacturing system (10).

8. The method of claim 6, wherein the customized consumable material filament (60) comprises:
at least one optical characteristic based on optical characteristics of the plurality of stock material filaments, and
at least one compositional characteristic based on compositional characteristics of the plurality of stock material filaments.

9. The method of claim 6 , wherein the average dimensions of the at least one stock material filament comprises an average diameters that ranges from about 1.3 millimeters to about 2.5 millimeters.

10. The method of claim 6, and further comprising detecting the customized consumable material filament (60) with an optical sensor (197) after the customized consumable material filament (60) exits the extrusion component (50).

## Patentansprüche

1. Ein Compoundierungssystem (12) zum Bilden eines angepassten Verbrauchsmaterialfilaments (60), wobei das Compoundierungssystem (12) aufweist:
- einen Controller (44), der dazu eingerichtet ist, im Betrieb eine Benutzereingabe bezüglich einer oder mehrerer vom Benutzer ausgewählter Materialcharakteristika zu empfangen;
- eine Mehrzahl von Antriebsmechanismen (48a - 48c), die dazu eingerichtet sind, betriebsbereit mit dem Controller (44) zu kommunizieren und weiter dazu eingerichtet sind, eine Mehrzahl von Ausgangsmaterialfilamenten mit unabhängigen Zuführraten, die zumindest teilweise basierend auf der Benutzereingabe bestimmt werden, zuzuführen;
- eine Extrusionskomponente (50), die einen Führungsverteiler (66) aufweist, der eine Vielzahl von Kanälen (70a - 70c) zur Führung des empfangenen Ausgangsmaterialfilaments von den Antriebsmechanismen (48a - 48c) zu einem Verflüssiger (68) aufweist, der eine Mischkomponente (80) aufweist, die zumindest teilweise darin angeordnet ist, und wobei die Extrusionskomponente (50) dazu eingerichtet ist, die Mehrzahl von zugeführten Ausgangsmaterialfilamenten mit unabhängigen Zuführraten zu empfangen und die weiter dazu eingerichtet ist, die empfangenen Ausgangsmaterialien zumindest teilweise innerhalb des Verflüssigers (68) zu schmelzen und zu mischen, um die angepassten Verbrauchsmaterialfilamente (60) in einem extrudierbaren Zustand mit einer Extrusionsrate einem Extrusionskopf (20) eines digitalen Fertigungssystems (10) bereitzustellen, wobei nach dem Verfestigen der angepassten Verbrauchsmaterialfilaments (60) dieses ein oder mehrere vom Benutzer ausgewählte Materialeigenschaften und durchschnittliche Durchmesser, die innerhalb der dimensionalen Spezifikation für das digitale Fertigungssystem (10) liegen, aufweisen;
- eine Aufnahmespule (54), die konfiguriert ist, um das angepasste Verbrauchsmaterialfilament (60) von der Extrusionskomponente (50) aufzunehmen; und
- die Aufnahmespule (54) dazu eingerichtet ist, das angepasste Verbrauchsmaterialfilament (60) zu einem Extrusionskopf (20) des digitalen Fertigungssystems (10) weiterzuleiten.

2. Das Compoundierungssystem (12) nach Anspruch 1, wobei das angepasste Verbrauchsmaterialfilament (60) aufweist:
- mindestens eine optische Charakteristik, basierend auf einer optischen Charakteristik der Vielzahl von Ausgangsmaterialfilamenten, und
- mindestens eine Kompositionscharakteristik, basierend auf Kompositionscharakteristika der Vielzahl von Ausgangsmaterialfilamenten.

3. Das Compoundierungssystem (12) nach Anspruch 1, ferner umfassend einen optischen Sensor (197), der dazu eingerichtet ist, betriebsbereit mit dem Controller (44) zu kommunizieren und der weiterhin dazu eingerichtet ist, das angepasste Verbrauchsmaterialfilament (60) zu detektieren, nachdem das anpassbare Verbrauchsmaterialfilament (60) die Extrusionskomponente (50) verlassen hat.

4. Das Compoundierungssystem (12) nach Anspruch 1, wobei die Dimensionen des angepassten Verbrauchsmaterialfilaments (60) ein Filament definieren, welches einen durchschnittlichen Durchmesser in einem Bereich von etwa 1,3 Millimeter bis etwa 2,5 Millimetern aufweist.

5. Das Compoundierungssystem (12) nach Anspruch 1, ferner umfassend ein Gehäuse (38), welches an dem digitalen Fertigungssystem (10) feststellbar ist.

6. Ein Verfahren zur Ausbildung eines angepassten Verbrauchsmaterialfilaments (60) zur Verwendung in einem digitalen Fertigungssystem, wobei das Verfahren aufweist:
- Empfang einer Mehrzahl von Ausgangsmaterialfilamenten, wobei mindestens eines der Ausgangsmaterialfilamente einen durchschnittlichen Durchmesser aufweist, der innerhalb dimensionalen Spezifikation für das digitale Fertigungssystem (10) liegt;
- Empfang einer Benutzereingabe bezüglich einer oder mehrerer vom Benutzer ausgewählter Materialcharakteristika;
- Bestimmung unabhängiger Zuführraten für mindestens zwei der Ausgangsmaterialfilamente, basierend zumindest teilweise auf Benutzereingabe;
- Führung der empfangenen, zumindest zwei Ausgangsmaterialfilamente, mittels eines Führungsverteilers (66) zu einem Verflüssiger (68) einer Extrusionskomponente (50);
- Zuführung der mindestens zwei Ausgangsmaterialfilamente zu einer Extrusionskomponente (50) basierend auf den bestimmten unabhängigen Zuführraten, wobei die Extrusionskomponente einen Verflüssiger (68) aufweist, der eine Mischkomponente (80) aufweist, die zumindest teilweise darin angeordnet ist und der Führungsverteiler (66) dazu eingerichtet ist, die mindestens zwei Ausgangsmaterialfilamente zu dem Verflüssiger (68) zu leiten;
- Schmelzen und Vermischen der zugeführten Ausgangsmaterialfilamente während der kontinuierlichen Zuführung der Ausgangsmaterialfilamente bei unabhängigen Zuführraten durch den Verflüssiger (68) in die Extrusionskomponente (50);
- Extrusion des gemischten Materials zur Bereitstellung eines angepassten Verbrauchsmaterialfilaments (60), wobei nach der Verfestigung das angepasste Verbrauchsmaterialfilament (60) die eine oder mehreren benutzerdefinierten Materialeigenschaften und durchschnittlichen Dimensionen, die innerhalb der dimensionalen Spezifikation für das digitale Fertigungssystem (10) liegen, aufweisen.
- Weiterleiten des angepassten Verbrauchsmaterialfilaments (60) von der Extrusionskomponente (50) zu einer Aufnahmespule (54);
- Leiten des angepassten Verbrauchsmaterialfilaments (60) von der Aufnahmespule (54) zu einem Extrusionskopf (20) des digitalen Fertigungssystems (10) zur Verwendung mit einer Verbrauchsrate.

7. Das Verfahren des Anspruchs 6, wobei jede der Mehrzahl von Ausgangsmaterialfilamenten durchschnittliche Dimensionen aufweist, die jeweils innerhalb der dimensionalen Spezifikation für das digitale Fertigungssystem (10) liegen.

8. Das Verfahren nach Anspruch 6, wobei das angepasste Verbrauchsmaterialfilament (60) aufweist:
- mindestens eine optische Charakteristik basierend auf der optischen Charakteristik der Mehrzahl von Ausgangsmaterialfilamenten, und
- mindestens eine kompositionale Charakteristik, basierend auf der kompositionalen Charakteristik der Mehrzahl von Ausgangsmaterialfilamenten.

9. Das Verfahren nach Anspruch 6, wobei die durchschnittlichen Dimensionen von mindestens einem Ausgangsmaterialfilament einen durchschnittlichen Durchmesser aufweist, der in einem Bereich von etwa 1,3 Millimeter bis etwa 2,5 Millimetern liegt.

10. Das Verfahren nach Anspruch 6, weiter aufweisend die Detektierung des angepassten Verbrauchsmaterialfilaments (60) mit einem optischen Sensor (197), nachdem das angepasste Verbrauchsmaterialfilament (60) die Extrusionskomponente (50) verlassen hat.

## Revendications

1. Système de formulation (12) destiné à former un filament de matière consommable personnalisé (60), le système de formulation (12) comprenant :
une unité de commande (44) configurée pour recevoir de manière opérationnelle une entrée d'utilisateur relative à une ou plusieurs caractéristiques de matière sélectionnées par utilisateur ;
une pluralité de mécanismes d'entraînement (48a à 48c) configurés pour communiquer de manière opérationnelle avec l'unité de commande (44), et en outre configurés pour alimenter en une pluralité de filaments de matière première à des vitesses d'alimentation indépendantes qui sont déterminées d'après au moins en partie l'entrée d'utilisateur ;
un composant d'extrusion (50) comprenant une rampe de guidage (66) ayant une pluralité de canaux (70a à 70c) pour guider les filaments de matière première des mécanismes d'entraînement (48a à 48c) vers un liquéfacteur (68) ayant un composant de mélange (80) disposé au moins partiellement à l'intérieur et le composant d'extrusion (50) configuré pour recevoir la pluralité de filaments de matière première alimentés, à des vitesses d'alimentation indépendantes et en outre configuré pour au moins partiellement faire fondre et mélanger les matières premières reçues au sein du liquéfacteur (68) pour fournir le filament de matière consommable personnalisé (60) dans un état extrudable à une vitesse d'extrusion à une tête d'extrusion (20) d'un système de fabrication numérique (10), dans lequel lors de la solidification, le filament de matière consommable personnalisé (60) affiche les une ou plusieurs caractéristiques de matière sélectionnées par utilisateur et des diamètres moyens qui répondent à des spécifications dimensionnelles pour le système de fabrication numérique (10) ;
une bobine réceptrice (54) configurée pour recevoir le filament de matière consommable personnalisé (60) provenant du composant d'extrusion (50) ; et
la bobine réceptrice (54) est configurée pour relayer le filament de matière consommable personnalisé (60) à une tête d'extrusion (20) du système de fabrication numérique (10).

2. Système de formulation (12) selon la revendication 1, dans lequel le filament de matière consommable personnalisé (60) comprend :
au moins une caractéristique optique basée sur des caractéristiques optiques de la pluralité de filaments de matière première, et
au moins une caractéristique de composition basée sur des caractéristiques de composition de la pluralité de filaments de matière première.

3. Système de formulation (12) selon la revendication 1, et comprenant en outre un capteur optique (197) configuré pour communiquer de manière opérationnelle avec l'unité de commande (44), et configuré en outre pour détecter le filament de matière consommable personnalisé (60) après que le filament de matière consommable personnalisé (60) sort du composant d'extrusion (50).

4. Système de formulation (12) selon la revendication 1, dans lequel les dimensions du filament de matière consommable personnalisé (60) définissent un filament ayant un diamètre moyen allant d'environ 1,3 millimètre à environ 2,5 millimètres.

5. Système de formulation (12) selon la revendication 1, et comprenant en outre un logement (38) pouvant être solidarisé à un système de fabrication numérique (10).

6. Procédé de formation d'un filament de matière consommable personnalisé (60) à utiliser dans un système de fabrication numérique, le procédé comprenant :
la réception d'une pluralité de filaments de matière première, dans lequel au moins l'un des filaments de matière première a des diamètres moyens qui répondent à des spécifications dimensionnelles pour un système de fabrication numérique (10) ;
la réception d'une entrée d'utilisateur relative à une ou plusieurs caractéristiques de matière sélectionnées par utilisateur ;
la détermination de vitesses d'alimentation indépendantes pour au moins deux des filaments de matière première d'après au moins en partie l'entrée de l'utilisateur ;
le guidage des au moins deux filaments de matière première reçus avec une rampe de guidage (66) vers un liquéfacteur (68) d'un composant d'extrusion (50) ;
l'alimentation d'un composant d'extrusion (50) en les au moins deux filaments de matière première d'après les vitesses d'alimentation indépendantes déterminées, dans lequel le composant d'extrusion comprend le liquéfacteur (68) ayant un composant de mélange (80) disposé au moins partiellement à l'intérieur et la rampe de guidage (66) configurée pour guider les au moins deux filaments de matière première vers le liquéfacteur (68) ;
la fusion et le mélange des filaments de matière première alimentés tout en alimentant en continu le liquéfacteur (68) dans le composant d'extrusion (50) en les filaments de matière première à des vitesses d'alimentation indépendantes ;
l'extrusion des matières mélangées pour fournir le filament de matière consommable personnalisé (60), dans lequel, lors de la solidification, le filament de matière consommable personnalisé (60) affiche les une ou plusieurs caractéristiques de matière sélectionnées par utilisateur et les dimensions moyennes qui répondent aux spécifications dimensionnelles pour le système de fabrication numérique (10) ;
le relayage du filament de matière consommable personnalisé (60) à partir du composant d'extrusion (50) vers une bobine réceptrice (54) ;
la direction du filament de matière consommable personnalisé (60) de la bobine réceptrice (54) vers une tête d'extrusion (20) du système de fabrication numérique (10) pour une utilisation à une vitesse de consommation.

7. Procédé selon la revendication 6,
dans lequel chacun de la pluralité de filaments de matière première a des dimensions moyennes qui répondent aux spécifications dimensionnelles pour le système de fabrication numérique (10).

8. Procédé selon la revendication 6,
dans lequel le filament de matière consommable personnalisé (60) comprend :
au moins une caractéristique optique basée sur des caractéristiques optiques de la pluralité de filaments de matière première, et
au moins une caractéristique de composition basée sur des caractéristiques de composition de la pluralité de filaments de matière première.

9. Procédé selon la revendication 6, dans lequel les dimensions moyennes de l'au moins un filament de matière première comprennent des diamètres moyens qui varient d'environ 1,3 millimètre à environ 2,5 millimètres.

10. Procédé selon la revendication 6, et comprenant en outre la détection du filament de matière consommable personnalisé (60) avec un capteur optique (197) après que le filament de matière consommable personnalisé (60) sort du composant d'extrusion (50).
